**Europäisches Patentamt**

**European Patent Office**

**Office européen des brevets**

(19)

(11) Numéro de publication : **0 143 716 B2**

(12) # NOUVEAU FASCICULE DE BREVET EUROPEEN

(45) Date de publication du nouveau fascicule du brevet : **06.10.93 Bulletin 93/40**

(51) Int. Cl.⁵ : **C08F 10/02, C08F 4/60**

(21) Numéro de dépôt : **84402402.6**

(22) Date de dépôt : **26.11.84**

(54) **Procédé perfectionné de polymérisation et copolymérisation de l'étylène à pressions et températures élevées en présence de catalyseurs type ziegler.**

(30) Priorité : **24.11.83 ES 527529**

(43) Date de publication de la demande :
**05.06.85 Bulletin 85/23**

(45) Mention de la délivrance du brevet :
**11.11.87 Bulletin 87/46**

(45) Mention de la décision concernant
l'opposition :
**06.10.93 Bulletin 93/40**

(84) Etats contractants désignés :
**BE DE FR GB IT**

(56) Documents cités :
**FR-A- 2 257 603**
**FR-A- 2 302 305**
**DHT-4A (Hydrotalcite-like Compound), Kyowa**
**Chemical Industry Co.ltd., Japan, 15.07.1981**
**Technical Data of DHT-4A, Kyowa Chemical**
**Industry Co. Ltd., Japan**

(73) Titulaire : **REPSOL PETROLEO S.A.**
**José Abascal, No 4**
**28003 Madrid (ES)**

(72) Inventeur : **Achon Samblancat, Marco Antonio**
**Serrano 205**
**Madrid (ES)**
Inventeur : **del Amo Fernandez, Bernardo**
**Cesar Gonzalez Ruano 19**
**Madrid (ES)**
Inventeur : **Delgado Oyague, Juan Antonio**
**Avenida de Burgos 30**
**Madrid (ES)**
Inventeur : **Hernandez-Vaquero-Alvarez, José**
**Luis**
**Puentelarra 29**
**Madrid (ES)**

(74) Mandataire : **Faber, Jean-Paul et al**
**CABINET FABER 35, rue de Berne**
**F-75008 Paris (FR)**

## Description

La présente invention concerne un procédé amélioré de préparation du polyéthylène à pressions et températures élevées en utilisant des catalyseurs du type Ziegler.

Les procédés classiques de polymérisation et copolymérisation de l'éthylène à pressions et températures élevées sont appliqués avec des pressions supérieures à 500 bars et des températures supérieures à 140 °C, en présence de catalyseurs générateurs de radicaux libres ou de catalyseurs Ziegler. A la sortie du réacteur à haute pression, dans lequel ont eu lieu les réactions de polymérisation, le mélange de réaction est introduit dans un ou plusieurs séparateurs sous des conditions adéquates pour obtenir la séparation de l'éthylène du polymère en une ou en plusieurs étapes (éventuellement, on sépare aussi d'autres comonomères). Normalement, la pression dans ce premier séparateur est inférieure à 500 bars.

Lorsque, dans le réacteur de polymérisation, on utilise des catalyseurs du type Ziegler, qui sont actifs dans une large gamme de températures et de pressions, il peut arriver que les conditions opérationnelles dans les séparateurs mentionnés ci-dessus — température, pression, temps de séjour, etc. — soient telles que la réaction de polymérisation des monomères présents se poursuivre, avec formation de produits indésirables, tels que produits de faible poids moléculaire, cires, oligomères, etc., qui nuisent à la pureté du polymère obtenu dans le réacteur.

D'autre part, la polymérisation non contrôlée dans lesdits séparateurs ou dans les lignes de recyclage des monomères vers le réacteur peut donner lieu à des explosions désastreuses ou à l'obturation des lignes, empêchant ainsi le fonctionnement normal en continu. La présente invention concerne un procédé permettant d'éviter ces inconvénients.

On a déjà décrit l'addition au milieu de réaction de différents réactifs, tels qu'alcools, époxydes et hydroxydes alcalins, afin de désactiver les catalyseurs et de dissoudre les composés organo-aluminiques contenus par le polymère dans un solvant tel que l'eau, le méthanol, etc. Dans la présente invention, en revanche, le réactif est d'une nature chimique différente de celle des additifs mentionnés ci-dessus et il a pour objet de désactiver les constituants du catalyseur de manière à ce que les produits de réaction demeurent dans le polymère. Bien entendu, ces produits de réaction ne doivent pas conférer aux polymères des propriétés indésirables, telles que mauvaise odeur et coloration, et ne doivent pas poser de problèmes de corrosion au niveau des équipements normalement employés pour traiter les polymères.

Dans le FR-A-2 302 305, on décrit un procédé de polymérisation et copolymérisation de l'éthylène à des pressions supérieures à 500 bars et à des températures supérieures à 160 °C en présence de catalyseurs Ziegler, procédé qui, pour éviter les réactions secondaires pouvant avoir lieu dans les séparateurs, prévoit d'injecter, à la fin de la réaction, un sel métallique alcalin ou alcalino-terreux d'acides carboxyliques tels que les stéarates de calcium, magnésium, sodium et potassium. Cependant, l'utilisation de ce type de composés présente une série d'inconvénients.

En premier lieu, aux hautes températures du traitement, ces sels métalliques peuvent se décomposer en dégageant des vapeurs acides avec le risque de provoquer des corrosions sur l'équipement de polymérisation.

D'autre part, en neutralisant des acides tels que le HCl provenant du catalyseur, ils donnent lieu à la formation d'halures alcalins ou alcalino-terreux et à celle d'acides carboxyliques libres, qui sont corrosifs pour les équipements de transformation ultérieurs des polymères.

La présente invention concerne un procédé perfectionné de polymérisation et copolymérisation de l'éthylène selon la revendication 1 à des pressions de 500 jusqu'à 3000 bars et à des températures supérieures à 140°C en présence de catalyseurs constitués par un dérivé d'un métal de transition et d'un dérivé organique d'aluminium. Ce procédé a pour objet d'éviter les réactions secondaires pouvant se produire dans les séparateurs et dans les lignes de recyclage des monomères vers le réacteur, et il est caractérisé par le fait qu'on injecte à la masse en réaction au moins une substance inorganique avec des propriétés échangeuses d'anions choisie parmi les carbonates, hydroxydes, phosphates et des chlorures naturels ou synthétiques d'aluminium et d'un métal alcalin ou alcalinoterreux, la quantité injectée étant suffisante pour provoquer la désactivation du catalyseur. En outre, cette substance inorganique est choisie de manière à ce que les produits qu'elle forme avec les constituants du catalyseur ne soient pas entraînés avec les monomères dans le recyclage vers le réacteur, mais demeurent dans le polymère final.

Des modes de réalisation préférés font l'objet des revendications 2 à 5.

On désigne ici comme substance inorganique échangeuse d'ions toute substance inorganique capable d'absorber des ions chlorure et de les fixer de manière stable dans sa structure.

Comme exemples de substances inorganiques utilisables dans le cadre de la présente invention, on a : $KAl(CO_3)_2 \cdot H_2O$, $Al_2(CO_3)_2 \cdot 12Al(OH)_3$, $Ba_2Al_4(CO_3)_2(OH)_8 \cdot 3H_2O$, $CaAl_2(CO_3)_2(OH)_4 \cdot 3H_2O$ ; $Ca_{16}Al_8(OH)_{54}CO_3 \cdot 21 \cdot H_2O$, $CaAl_2(CO_3)_2(OH)_4 \cdot 3H_2O$, $Mg_6Al_2CO_3(OH)_{16} \cdot 4H_2O$, $Mg_2Al_2(CO_3)_4(OH)_2 \cdot 15H_2O$, $Mg_{4.6}Al_2CO_3(OH)_{13} \cdot 3,5H_2O$, $Mg_{4.5}Al_2Cl_2(OH)_{13} \cdot mH_2O$, $Mg_{4.5}Al_2(OH)_2(HPO_4) \cdot mH_2O$ y $NaAlCO_3(OH)_2$.

2

Les substances organiques objet de la présente invention sont normalement injectées en suspension dans un liquide inerte, par exemple, isododécane, n-tétradécane, n-heptane, huiles blanches, etc. Elles peuvent être utilisées sous forme hydratée ou anhydre.

Le dérivé de métal de transition utilisable comme constituant du catalyseur est en général un dérivé de titane, en particulier le trichlorure de titane sous ses diverses formes cristallines, éventuellement co-cristallisé avec le trichlorure d'aluminium ; il peut être également un composé de formule générale $(Ti(OR)_{4-n}X_n$, où X est un atome d'halogène et R un groupe alkyle contenant entre 1 à 20 atomes de carbone et n un nombre quelconque remplissant la condition $0 \leqq n \leqq 4$. Le composé de titane peut être utilisé comme tel ou bien sur un support adéquat, tel que chlorure de magnésium, silicium, etc., comme cela est bien connu dans la technique actuelle.

Le dérivé organique d'aluminium utilisé comme deuxième composant du catalyseur est, de préférence, un trialkylaluminium ou un halogénure de dialkylaluminium.

Le procédé selon l'invention est applicable à la polymérisation de l'éthylène et à la copolymérisation de l'éthylène avec d'autres monomères polymérisables avec l'éthylène en présence des catalyseurs indiqués précédemment ; exemples de ces monomères : propylène, butène-1, hexène-1, octène-1, etc...

La réaction de polymérisation ou de copolymérisation de l'éthylène peut être réalisée dans des réacteurs modèle autoclave à agitation, des réacteurs tubulaires ou des réacteurs en série de l'un ou de l'autre type. Dans le cadre de l'invention, on peut utiliser les procédés connus pour régler le poids moléculaire des polymères, par exemple, l'injection dans la zone de réaction d'agents de transfert de chaîne adéquats, ainsi que les procédés habituels pour améliorer les propriétés des polymères, par exemple en injectant dans la masse de réaction des agents antioxydants ou des additifs similaires.

La réaction de polymérisation selon l'invention est effectuée en continu. Le désactiveur inorganique doit être injecté dans la masse de réaction sur le lieu de l'installation où il est nécessaire d'arrêter la réaction de polymérisation ou de copolymérisation. Ce lieu de l'installation peut être une zone du réacteur située près de la sortie des produits de réaction ; si on utilise plusieurs réacteurs en série ou un réacteur avec plusieurs zones de réaction, le lieu d'injection adéquat est le dernier des réacteurs en série ou la dernière zone du réacteur à plusieurs zones de réaction. L'injection peut être réalisée également dans un des séparateurs qui reçoivent les produits de réaction. En général, on préfère que l'injection soit réalisée le plus près possible de la soupape de sortie du réacteur.

La quantité de désactiveur inorganique doit être suffisante pour assurer la désactivation du catalyseur. Cette désactivation est obtenue par la destruction d'au moins un des composants du catalyseur c'est-à-dire du dérivé de métal de transition ou de dérivé organique d'aluminium. Mais il est préférable d'utiliser une quantité de désactiveur suffisante pour faire entrer en réaction les deux constituants. Selon l'invention, on utilise de préférence une quantité de désactiveur comprise entre 0,1 et 10 milliéquivalents gramme de désactiveur pour chaque milliatome d'aluminium et de titane.

Les principaux avantages industriels de l'invention sont les suivants :

Eviter les réactions secondaires dans les séparateurs et les lignes de recyclage vers le réacteur, qui ont pour effet la production de polymères indésirables.

Neutraliser le chlore présent dans le catalyseur, qui est libéré par suite d'une destruction non contrôlée du catalyseur.

Eviter le jaunissement qui peut se produire lorsque le polymère est mis en contact avec des antioxydants du type phénolique.

Eliminer la corrosivité provoquée par la présence de chlore dans les polymères, en diminuant radicalement la perte de propriétés physiques observée quand on utilise d'autres désactiveurs se situant hors du cadre de la présente invention.

Les exemples suivants, non limitatifs, illustrent la présente invention.

La polymérisation de l'éthylène a été réalisée en continu dans un réacteur type autoclave avec agitation, de 0,75 litres de capacité, muni de deux séparateurs à haute et à basse pression d'éthylène et d'un système de recyclage de l'éthylène non entré en réaction vers le réacteur. Les conditions opérationnelles ont été les suivantes:

| | |
|---|---|
| Pression dans le réacteur | 1 200 bars |
| Température de réaction | 200 °C |
| Temps de séjour | 50 secondes |
| Catalyseur | $Cl_4Ti/Cl_2Mg + AlEt_3$ |

Comme désactiveur, on a utilisé une suspension dans le tétradécane de $Mg_{4,5}Al_2(OH)_{13}CO_3 \cdot 3,5H_2O$, en une quantité telle que le rapport entre milliéquivalents-gramme de désactiveur et milliatomes d'aluminium et de titane a été de 0,3.

Le désactiveur a été injecté dans la soupape de sortie du réacteur.

## EP 0 143 716 B2

Après 48 heures de fonctionnement ininterrompu, on a recueilli 100 kg de polyéthylène d'une haute stabilité thermique et à l'oxydation, qui n'a posé aucun problème de corrosion au niveau des équipements de transformation. De même, pendant la réaction, on n'a détecté aucune formation de cires ou produits de faible poids moléculaire pouvant être attribués à des réactions de polymérisation hors du réacteur proprement dit.

## Revendications

1. Procédé continu de polymérisation et copolymérisation de l'éthylène à des pressions de 500 jusqu'à 3000 bars et à des températures supérieures à 140°C en présence de catalyseurs contenant au moins un dérivé d'un métal de transition et un dérivé organique d'aluminium, caractérisé en ce qu'on injecte, comme désactiveur, dans le mélange en réaction, au moins, une substance inorganique échangeuse d'anions choisie parmi les carbonates, phosphates, hydroxydes et des chlorures, naturels ou synthétiques d'aluminium et d'un métal alcalin ou alcalino terreux, en quantité suffisante pour provoquer la désactivation du catalyseur, ledit désactiveur étant choisi de manière à ce que ses produits de réaction avec les constituants du catalyseur soient retenus dans le polymère.

2. Procédé selon la revendication 1, caractérisé en ce que ledit désactiveur est injecté dans la dernière zone du réacteur de polymérisation lorsqu'on utilise un réacteur du type autoclave avec zones de réaction séparées.

3. Procédé selon la revendication 1, caractérisé en ce que ledit désactiveur est injecté justement dans la soupape de sortie du réacteur de polymérisation.

4. Procédé selon la revendication 1, caractérisé en ce que ledit désactiveur est injecté à l'entrée d'un des séparateurs.

5. Procédé selon les revendications 1 à 4, caractérisé en ce que le dérivé d'un métal de transition est un dérivé de titane et le désactiveur est utilisé en des quantités telles que le rapport entre milliéquivalents-gramme de désactiveur et milliatomes de titane et aluminium du catalyseur est compris entre 0,1 et 10.

## Claims

1. A continuous method of polymerization and copolymerization of ethylene at pressures from 500 up to 3 000 bars and at temperatures above 140°C in the presence of catalysts containing at least one derivative of a transition metal and one organic derivative of aluminium, characterized in that there is injected into the reaction mixture as deactivator at least one inorganic anion-exchange substance chosen from the natural or synthetic carbonates, phosphates, hydroxydes and chlorides of aluminium and of an alkaline or alkaline earth metal in sufficient quantity to cause deactivation of the catalyst, the said deactivator being chosen so that its products of reaction with the constituents of the catalyst are retained in the polymer.

2. A method as in Claim 1, characterized in that the said deactivator is injected into the last zone of the polymerization reactor when a reactor is utilized which is of autoclave type with separate reaction zones.

3. A method as in Claim 1, characterized in that the said deactivator is injected precisely into the outlet valve from the polymerization reactor.

4. A method as in Claim 1, characterized in that the said deactivator is injected at the input to one of the separators.

5. A method as in Claims 1 to 4, characterized in that the derivative of a transition metal is a derivative of titanium and the deactivator is utilized in quantities such that the ratio between milligramme equivalents of deactivator and milliatoms of titanium and of aluminium in the catalyst lies between 0.1 and 10.

## Patentansprüche

1. Kontinuierliches Verfahren zur Polymerisation und Copolymerisation von Ethylen bei Drücken von 500

4

bis zu 3 000 bar und Temperaturen über 140°C in Gegenwart von Katalysatoren, die mindestens ein Derivat eines Übergangsmetalles und ein organisches Derivat des Aluminiums enthalten, dadurch gekennzeichnet, dass man die Reaktionsmischung mindestens eine anorganische Anionenaustauschersubstanz als Deaktivierungsmittel einspritzt, die aus natürlischen oder synthetischen Carbonaten, Phosphaten, Hydroxiden und Chloriden des Aluminiums und eines Alkalimetalles oder Erdalkalimetalles ausgewählt ist, in Mengen, die zu einer Deaktivierung des Katalysators ausreichen, wobei das Deaktivierungsmittel derart ausgewählt wird, dass seine Reaktionsprodukte mit den Bestandteilen des Katalysators im Polymeren zurückgehalten werden.

2. Verfahren nach Anspruch 1, dadurch gekennzeichnet, dass man das Deaktivierungsmittel in die letzte Zone des Polymerisationsreaktors einspritzt, wenn man einen Reaktor vom Autoklaventyp mit getrennten Reaktionszonen verwendet.

3. Verfahren nach Anspruch 1, dadurch gekennzeichnet, dass man das Deaktivierungsmittel genau in das Ausgangsventil des Polymerisationsreaktors einspritzt.

4. Verfahren nach Anspruch 1, dadurch gekennzeichnet, dass man das Deaktivierungsmittel beim Eingang von einem der Abscheider einspritzt.

5. Verfahren nach Ansprüche 1 bis 4, dadurch gekennzeichnet, dass man als Derivat eines Übergangsmetalles ein Titanderivat verwendet und dass man das Deaktivierungsmittel in solchen Mengen einsetzt, dass das Verhältnis zwischen Milliäquivalentgrammen Deaktivierungsmittel und Milliatomen Titan und Aluminium des Katalysators zwischen 0,1 und 10 liegt.